# EUROPEAN PATENT SPECIFICATION

(11) **EP 4 471 681 B1**
(45) Date of publication and mention of the grant of the patent: **04.03.2026**
(21) Application number: 23382503.3
(22) Date of filing: 29.05.2023
(51) Int. Cl.: G06Q 10/04, G06Q 10/06, G06Q 10/08, G06Q 10/20, G06Q 30/018

(54) **DECISION MAKING SUPPORT FOR FEATURES PUBLISHED IN DIGITAL FORMAT WITH NON-AIRAC VALID TIME**
ENTSCHEIDUNGSUNTERSTÜTZUNG FÜR IN DIGITALEM FORMAT VERÖFFENTLICHTE FUNKTIONEN MIT NICHT-FUNKAC-GÜLTIGKEITSZEIT
PRISE EN CHARGE DE DÉCISION POUR DES CARACTÉRISTIQUES PUBLIÉES EN FORMAT NUMÉRIQUE AVEC UN TEMPS VALIDE NON-AIRAC

(43) Date of publication of application: 04.12.2024
(73) Proprietor: The Boeing Company, Arlington, VA 22202 (US)
(72) Inventor: ZORICIC, Marko, 63263 Neu-Isenburg (DE); NAIK, Milind Vasudeo, 63263 Neu-Isenburg (DE); COSTAS ÁLVAREZ, Pablo, 28042 Madrid (ES); SINGH KHALSA, Guru Tej, 63263 Neu-Isenburg (DE); CROSS, Mary Ann, Golden, 80403 (US)
(74) Representative: ZBM Patents - Zea, Barlocci & Markvardsen

(56) References cited:
- CN-A- 114 912 517
- US-A1- 2019 389 565
- US-B2- 9 799 005

## Description

### BACKGROUND INFORMATION

### Background:

The present disclosure relates generally to data management systems, and more specifically, to a system for assisting decision making by providing partial automation in presenting options to users in order to reduce manual workload.

With the transition from AIS (Aeronautical Information Service) to AIM (Aeronautical Information Management), a new data format for AISP's (Aeronautical Information Service Provider) products will be AIXM (Aeronautical Information Exchange Model) based on XML and GML. One of the primary characteristics of AIXM is temporality, which gives AIXM the possibility to have features valid for the validity period (valid time), unlike a fixed AIRAC (Aeronautical Information Regulation and Control) cycle period.

Therefore, it would be desirable to have a method and apparatus that take into account at least some of the issues discussed above, as well as other possible issues. Document US2019389565A1 is entitled Management of an aircraft. Document CN114912517 is entitled AIRAC-based periodic aviation navigation data fusion and graphical verification method.

### SUMMARY

An illustrative embodiment provides a computer-implemented method of decision making support. The method comprises receiving input of a current data file, wherein the current data file includes a valid time for features within the current data file. The valid time of the current data file is compared with Aeronautical Information Regulation and Control (AIRAC) cycle effective dates. Responsive to a discrepancy between the valid time of the current data file and the AIRAC cycle effective dates, the system determines if a feature change resulting from the discrepancy is flight critical. The feature change and a proposed solution with suggested text are displayed to a user in a dashboard. Responsive to input of agreement from the user to the proposed solution, the system automatically creates a change notice with the suggested text, a business process management ticket, and a data entry into a database.

Another illustrative embodiment provides a system for decision making support. The system comprises a storage device that stores program instructions and one or more processors operably connected to the storage device and configured to execute the program instructions to cause the system to: receive input of a current data file, wherein the current data file includes a valid time for features within the current data file; compare the valid time of the current data file with Aeronautical Information Regulation and Control (AIRAC) cycle effective dates; responsive to a discrepancy between the valid time of the current data file and the AIRAC cycle effective dates, determine if a feature change resulting from the discrepancy is flight critical; display the feature change and a proposed solution with suggested text to a user in a dashboard; and responsive to input of agreement from the user to the proposed solution, automatically create a change notice with the suggested text, a business process management ticket, and a data entry into a database.

Another illustrative embodiment provides a computer program product for decision making support. The computer program product comprises a computer-readable storage medium having program instructions embodied thereon to perform the steps of: receiving input of a current data file, wherein the current data file includes a valid time for features within the current data file; comparing the valid time of the current data file with Aeronautical Information Regulation and Control (AIRAC) cycle effective dates; responsive to a discrepancy between the valid time of the current data file and the AIRAC cycle effective dates, determining if a feature change resulting from the discrepancy is flight critical; displaying the feature change and a proposed solution with suggested text to a user in a dashboard; and responsive to input of agreement from the user to the proposed solution, automatically creating a change notice with the suggested text, a business process management ticket, and a data entry into a database.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments can be implemented;
**Figure 2** is an illustration of a block diagram of a decision making support system in accordance with an illustrative embodiment;
**Figure** 3 depicts a diagram illustrating a discrepancy between an AIXM file and AIRAC cycle to which the illustrative embodiments may be applied;
**Figure** 4 depicts a decision making support dashboard in accordance with and illustrative embodiment;
**Figure** 5 depicts a flowchart of a process for visualization within a spherical space in accordance with an illustrative embodiment; and
**Figure** 6 is an illustration of a block diagram of a data processing system in accordance with an illustrative embodiment.

### DETAILED DESCRIPTION

The illustrative embodiments recognize and take into account one or more different considerations as described herein. For example, the illustrative embodiments recognize and take into account that with the transition from AIS (Aeronautical Information Service) to AIM (Aeronautical Information Management), a new data format for AISP's (Aeronautical Information Service Provider) products will be AIXM (Aeronautical Information Exchange Model) based on XML and GML.

The illustrative embodiments also recognize and take into account that one of the primary characteristics of AIXM is temporality, which gives AIXM the possibility to have features valid for the validity period (valid time), unlike a fixed AIRAC (Aeronautical Information Regulation and Control) cycle period. There are no limitations on when this validity should start or end. On the other side, the whole aviation industry, and especially FMS (Flight Management Systems) is built on the already prescribed validity periods, so-called AIRAC cycles.

The illustrative embodiments also recognize and take into account that AIRAC cycles are based on 28 days periods, and once data are incorporated into FMS, there is no possibility of changing it until the next 28-day cycle. Because of these discrepancies between AISP's products validity period and AIRAC validity period, Data houses' analysts are facing challenges in order to choose the best decision and not overlook the date discrepancy.

The illustrative embodiments also recognize and take into account that present methods contain manual steps wherein analysts have to compare validity periods provided in AIXM files and published AIRAC dates for every feature coded in AIXM file. The AIXM file can theoretically be inserted in a database, but because of FMS limitations, features which will be used for FMSs should be filtered by the validity periods. Besides validity period, analysts have to manually calculate validity period difference and check what the features changes are. Additionally, analysts must check if feature changes are flight critical or not and decide if change notices and/or request for flight alert. Additionally, analysts and standard specialists have to write change notices and flight alert manually.

The illustrative embodiments provide a system for decision-making support. A dashboard generated by the system provides analysts with options in order to make the best decision regarding next steps. Decision making support is provides in the form of options for analysts to either ingest data in the system or manually enter a solution. The system will automatically change notices and/or flight alerts for customers when required. With the implementation of this system, the decision making process can be smoother, and safety aspects will be incorporated.

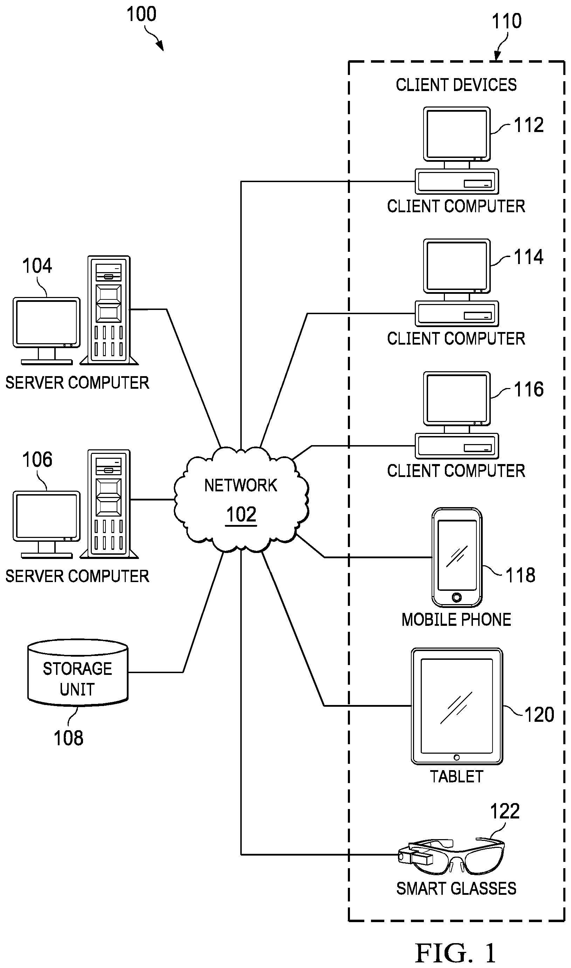

With reference to **Figure 1****,** a pictorial representation of a network of data processing systems is depicted in which illustrative embodiments may be implemented. Network data processing system 100 is a network of computers in which the illustrative embodiments may be implemented. Network data processing system 100 contains network 102, which is the medium used to provide communications links between various devices and computers connected together within network data processing system 100. Network 102 might include connections, such as wire, wireless communication links, or fiber optic cables.

In the depicted example, server computer 104 and server computer 106 connect to network 102 along with storage unit 108. In addition, client devices 110 connect to network 102. In the depicted example, server computer 104 provides information, such as boot files, operating system images, and applications to client devices 110. Client devices 110 can be, for example, computers, workstations, or network computers. As depicted, client devices 110 include client computers **112, 114,** and **116.** Client devices 110 can also include other types of client devices such as mobile phone 118, tablet computer 120, and smart glasses 122.

In this illustrative example, server computer 104, server computer 106, storage unit 108, and client devices 110 are network devices that connect to network 102 in which network 102 is the communications media for these network devices. Some or all of client devices 110 may form an Internet of things (IoT) in which these physical devices can connect to network 102 and exchange information with each other over network 102.

Client devices 110 are clients to server computer 104 in this example. Network data processing system 100 may include additional server computers, client computers, and other devices not shown. Client devices 110 connect to network 102 utilizing at least one of wired, optical fiber, or wireless connections.

Program code located in network data processing system 100 can be stored on a computer-recordable storage medium and downloaded to a data processing system or other device for use. For example, the program code can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

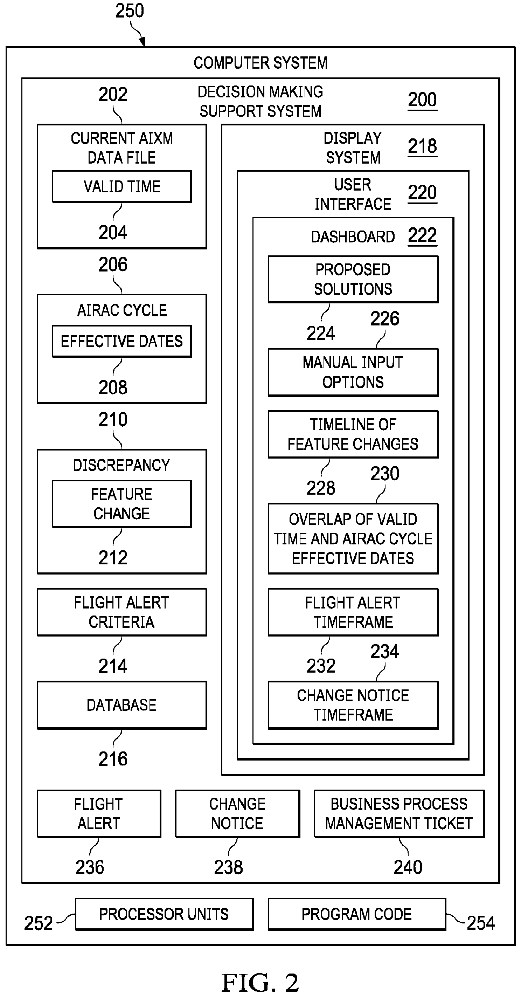

With reference now to **Figure 2****,** an illustration a block diagram of a decision making support system is depicted in accordance with an illustrative embodiment. In this illustrative example, decision making support system **200** includes components that can be implemented in hardware such as the hardware shown in network data processing system **100** in **Figure 1****.**

Decision making support system **200** ingests a current data file **202,** such as an AIXM file, and compares it to an AIRAC cycle **206.** Decision making support system **200** looks for any discrepancy **210** between the valid time **204** of the AIXM file and the effective dates **208** of the AIRAC cycle **206.** Such a discrepancy **210** may result in a feature change **212.** Feature change **212** may comprise, for example, Runway identity change. Examples of other AIXM features that may comprise feature change **212** include AirportHeloport, Airspace, Elevation, Azimuth, Route, and Glidepath.

The feature change **212** resulting from discrepancy **210** may or may not be flight critical as determined by flight alert criteria **214.** For example, every altitude change would be considered flight critical, but a course change of 1 degree that is not part of the final approach procedure would not be considered flight critical. Flight alert criteria **214** may be updated regularly based on industry standards.

Decision making support system **200** provides information to a user in dashboard **222** in a user interface **220** generated by display system **218.** Display system **218** is a physical hardware system and includes one or more display devices on which user interface **220** can be displayed. User interface **220** can be a graphical user interface.

The display devices in display system **218** can include at least one of a light emitting diode (LED) display, a liquid crystal display (LCD), an organic light emitting diode (OLED) display, a computer monitor, a projector, a flat panel display, a heads-up display (HUD), a head-mounted display (HMD), or some other suitable device that can output information for the visual presentation of information.

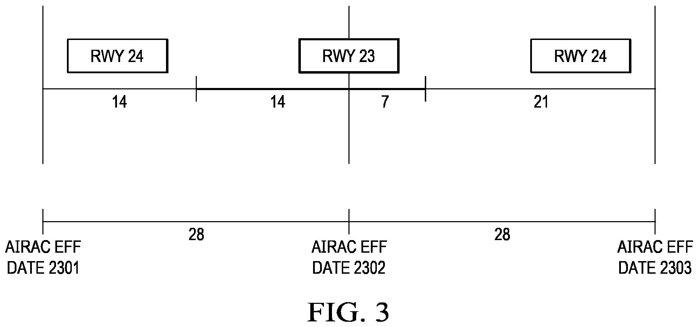

Dashboard **222** provides the user with information related to any discrepancy **210** and feature change **212** resulting from comparison of the current AIXM file **202** to the AIRAC cycle **206.** This information may include a timeline of feature changes **228,** overlap of valid time with the AIRAC cycle effective dates **230** (see **Figure 3****),** a flight alert **232** timeframe, and a change notice **234** timeframe.

Decision making support system **200** may display proposed solutions **224** to the user in dashboard **222.** Decision making support system **200** may generate proposed solutions **224** by cross-referencing the identified feature change **212** with database **216.** The user may accept and select the proposed solutions **224,** in which case decision making support system **200** will automatically create a change notice **238** and business process management ticket **240** and update an entry in database **216.** Database **216** may comprise, e.g., Jeppesen Aviation Database (JAD), which includes worldwide information/entities of aviation data. If the feature change **212** is flight critical, decision making support system **200** will also automatically create a flight alert **236.**

If the user does not agree with the proposed solutions, dashboard **222** also displays manual input options **226** for the user to manually input a desired solution and update the database **216.**

Decision making support system **200** can be implemented in software, hardware, firmware, or a combination thereof. When software is used, the operations performed by decision making support system **200** can be implemented in program code configured to run on hardware, such as a processor unit. When firmware is used, the operations performed by decision making support system **200** can be implemented in program code and data and stored in persistent memory to run on a processor unit. When hardware is employed, the hardware can include circuits that operate to perform the operations in decision making support system **200.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **250** is a physical hardware system and includes one or more data processing systems. When more than one data processing system is present in computer system **250,** those data processing systems are in communication with each other using a communications medium. The communications medium can be a network. The data processing systems can be selected from at least one of a computer, a server computer, a tablet computer, or some other suitable data processing system.

As depicted, computer system **250** includes a number of processor units **252** that are capable of executing program code **254** implementing processes in the illustrative examples. As used herein a processor unit in the number of processor units **252** is a hardware device and is comprised of hardware circuits such as those on an integrated circuit that respond and process instructions and program code that operate a computer. When a number of processor units **252** execute program code **254** for a process, the number of processor units **252** is one or more processor units that can be on the same computer or on different computers. In other words, the process can be distributed between processor units on the same or different computers in a computer system. Further, the number of processor units **252** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

**Figure 3** depicts a diagram illustrating a discrepancy between an AIXM file and AIRAC cycle to which the illustrative embodiments may be applied. In the present example, RWY (runway) is a feature designated with the AIXM file as RWY24 and RWY23. RWY is designated as RWY24 for 14 days (valid dates), then 21 days as RWY23, and then RWY24 again for 21 days. However, as shown in the example, the valid dates for RWY in the AIXM file are not synchronized with AIRAC effective dates. AIRAC cycle 2301 is effective for 28 days, as is AIRAC cycle 3202.

As a result of the discrepancy between the AIXM file and AIRAC cycle, FMS data will have wrong data for 14 days in AIRAC cycle 2301 and 7 or 21 days in cycle 2302. Additionally, a potential flight alert will be required.

The illustrative embodiments provide partial automation in order to give the analyst decision support and options to reduce manual workload.

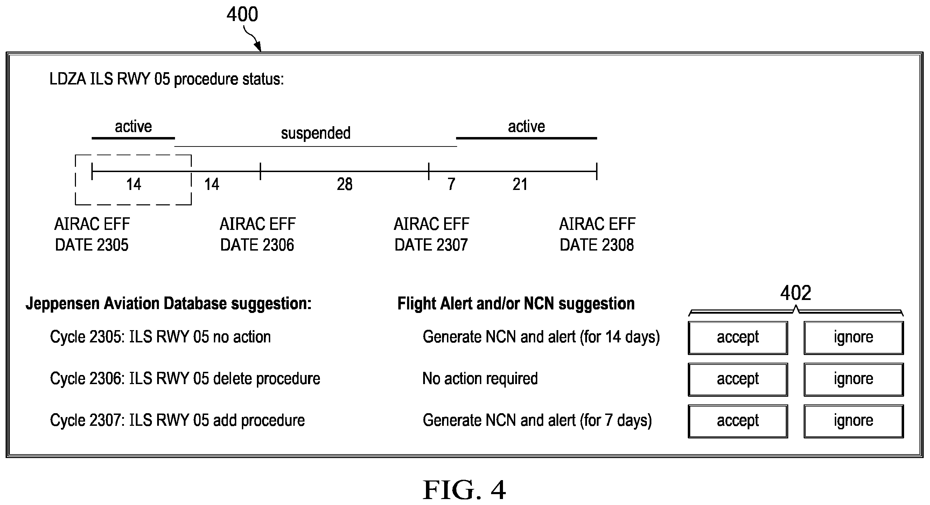

**Figure 4** depicts a decision making support dashboard in accordance with and illustrative embodiment. Dashboard **400** is a possible example implementation of dashboard **222 in** **Figure 2****.**

In the present example, dashboard **400** is displaying an instrument landing system (ILS) approach procedure for LDZA (Zagreb) airport. The approach procedure is for Runway 5 (RWY 05).

For AIRAC Cycle 2305, the decision making support system has proposed generating a change notice and alert for 14 days to account for the discrepancy between the AIXM valid time and effective dates of AIRAC Cycle 2305. The user may choose to accept the proposed solution or ignore it using one of input buttons **402.**

For AIRAC Cycle 2306, the decision making support system suggests that no action is required due to lack of discrepancy between the AIXM valid time and the AIRAC effective dates.

For AIRAC Cycle 207, the decision making support system has proposed generating a change notice and alert for 7 days to account for the discrepancy between the AIXM valid time and effective dates of AIRAC Cycle 2307.

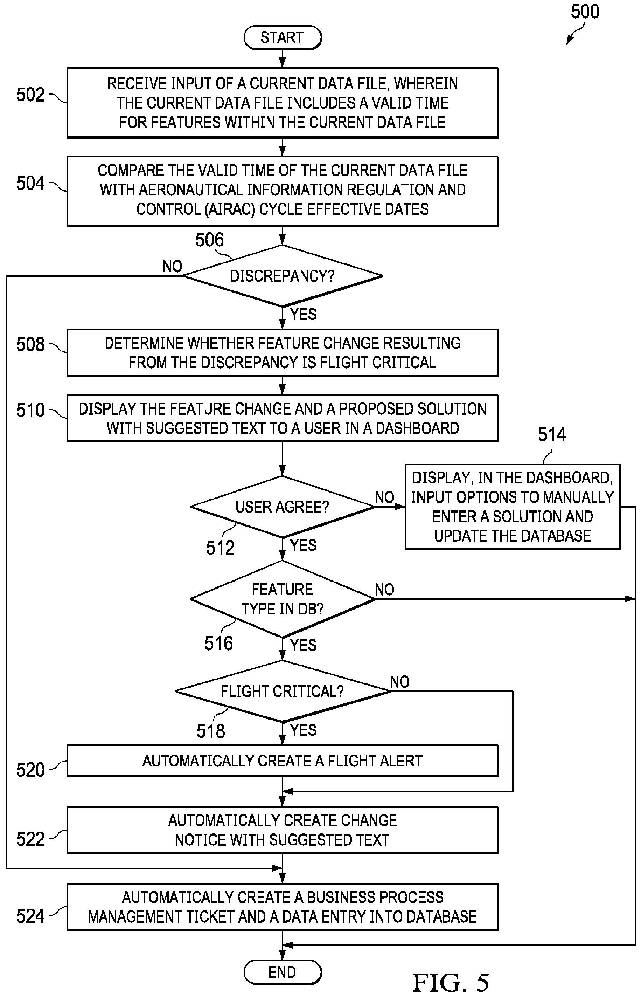

**Figure 5** depicts a flowchart of a process for decision making support in accordance with an illustrative embodiment. The process in **Figure 5** can be implemented in hardware, software, or both. When implemented in software, the process can take the form of program code that is run by one of more processor units located in one or more hardware devices in one or more computer systems. For example, the process can be implemented in decision making support system **200** in computer system **250 in** **Figure 2****.**

Process **500** begins by receiving input of a current data file (operation 502). The current data file includes a valid time for features within the current data file. The current data file may comprise an Aeronautical Information Exchange Model (AIXM) file.

Process **500** compares the valid time of the current data file with Aeronautical Information Regulation and Control (AIRAC) cycle effective dates (operation **504)** and determines if there is a discrepancy between them (operation **506).** Responsive to a determination there is no discrepancy between the valid time of the current data file and the AIRAC cycle effective dates, process **500** will follow the standard process and automatically creating a business process management ticket and data entry into the database (operation **524).**

Responsive to a discrepancy between the valid time of the current data file and the AIRAC cycle effective dates, process **500** determines if a feature change resulting from the discrepancy is flight critical (operation **508).** Determining whether a feature change resulting from the discrepancy is flight critical comprises comparing feature changes between the current data file and a previously released data file according to specified flight alert criteria.

Process **500** displays the feature change and a proposed solution with suggested text to a user in a dashboard (operation **510).** The dashboard may further display at least one of a timeline of the feature changes, overlap of the valid time with the AIRAC cycle effective dates, a timeframe of flight alert, and/or a timeframe of change notice.

The user may agree with/accept or reject proposed solution (operation **512).** If the user rejects the proposed solution, responsive to input of disagreement from the user to the proposed solution, process **500** displays in the dashboard input options to manually enter a solution and update the database (operation **514).**

If the user agrees with the proposed solutions, process **500** determines if the feature type affected by the change from the discrepancy is present in the database (operation 516). If the feature type is not in the database, process **500** ends.

If the feature type is in the database, process **400** will take different paths depending on whether the feature change is flight critical, as determined in operation **508** (operation **518).** Responsive to input of agreement from the user to the proposed solution and a determination that the feature change is not flight, process **500** automatically creates a change notice with the suggested text (operation **522)** and creates a business process management ticket and a data entry into the database (operation **524).**

Responsive to a determination that the feature change is flight critical, process **500** also automatically creates a flight alert (operation **520)** in addition to the change notice, business process management ticket, and database entry.

Process **500** then ends.

The flowchart and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

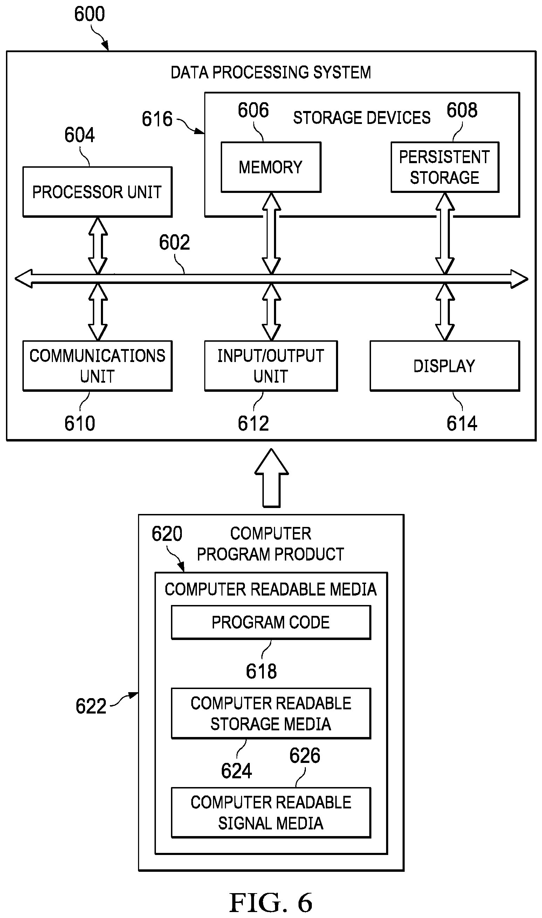

Turning now to **Figure 6****,** an illustration of a block diagram of a data processing system is depicted in accordance with an illustrative embodiment. Data processing system **600 may** be used to implement server computers **104** and **106** and client devices **110** in **Figure 1****,** as well as computer system **250** in **Figure 2****.** In this illustrative example, data processing system **600** includes communications framework **602,** which provides communications between processor unit **604,** memory **606,** persistent storage **608,** communications unit **610,** input/output (I/O) unit **612,** and display **614.** In this example, communications framework **602** takes the form of a bus system.

Processor unit **604** serves to execute instructions for software that may be loaded into memory **606.** Processor unit **604** may be a number of processors, a multi-processor core, or some other type of processor, depending on the particular implementation. In an embodiment, processor unit **604** comprises one or more conventional general-purpose central processing units (CPUs). In an alternate embodiment, processor unit **604** comprises one or more graphical processing units (GPUs).

Memory **606** and persistent storage **608** are examples of storage devices **616.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **616** may also be referred to as computer-readable storage devices in these illustrative examples. Memory **606,** in these examples, may be, for example, a random access memory or any other suitable volatile or non-volatile storage device. Persistent storage **608** may take various forms, depending on the particular implementation.

For example, persistent storage **608** may contain one or more components or devices. For example, persistent storage **608** may be a hard drive, a flash memory, a rewritable optical disk, a rewritable magnetic tape, or some combination of the above. The media used by persistent storage **608** also may be removable. For example, a removable hard drive may be used for persistent storage **608.** Communications unit **610,** in these illustrative examples, provides for communications with other data processing systems or devices. In these illustrative examples, communications unit **610** is a network interface card.

Input/output unit **612** allows for input and output of data with other devices that may be connected to data processing system **600.** For example, input/output unit **612** may provide a connection for user input through at least one of a keyboard, a mouse, or some other suitable input device. Further, input/output unit **612** may send output to a printer. Display **614** provides a mechanism to display information to a user.

Instructions for at least one of the operating system, applications, or programs may be located in storage devices **616,** which are in communication with processor unit **604** through communications framework **602.** The processes of the different embodiments may be performed by processor unit **604** using computer-implemented instructions, which may be located in a memory, such as memory **606.**

These instructions are referred to as program code, computer-usable program code, or computer-readable program code that may be read and executed by a processor in processor unit **604.** The program code in the different embodiments may be embodied on different physical or computer-readable storage media, such as memory **606** or persistent storage **608.**

Program code **618** is located in a functional form on computer-readable media **620** that is selectively removable and may be loaded onto or transferred to data processing system **600** for execution by processor unit **604.** Program code **618** and computer-readable media **620** form computer program product **622** in these illustrative examples. In one example, computer-readable media **620** may be computer-readable storage media **624** or computer-readable signal media **626.**

In these illustrative examples, computer-readable storage media **624** is a physical or tangible storage device used to store program code **618** rather than a medium that propagates or transmits program code **618.** Computer readable storage media **624,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **618** may be transferred to data processing system 600 using computer-readable signal media **626.** Computer-readable signal media **626** may be, for example, a propagated data signal containing program code **618.** For example, computer-readable signal media **626** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **600** are not meant to provide architectural limitations to the manner in which different embodiments may be implemented. The different illustrative embodiments may be implemented in a data processing system including components in addition to or in place of those illustrated for data processing system **600.** Other components shown in **Figure 6** can be varied from the illustrative examples shown. The different embodiments may be implemented using any hardware device or system capable of running program code **618.**

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A computer-implemented method (500) of decision making support, the method comprising:
using a number of processors (252) to perform the operations of:
receiving (502) input of an Aeronautical Information Exchange Model, AIXM, file and wherein the AIXM file includes a valid time (204) for features within the current data file;
comparing (504) the valid time of the AIXM file with an Aeronautical Information Regulation and Control (AIRAC) cycle (206) effective dates (208);
responsive to a discrepancy (506) between the valid time of the AIXM file and the AIRAC cycle effective dates, determining (508) if a feature change (212) resulting from the discrepancy is flight critical; wherein determining whether a feature change resulting from the discrepancy is flight critical comprises comparing feature changes between the AIXM file and a previously released data file according to specified flight alert criteria (214);
displaying (510) the feature change and a proposed solution (224) with suggested text to a user in a dashboard (222); wherein a decision-making support system (200) generates the proposed solution (224) by cross-referencing the identified feature change (212) with the database (216); and
responsive to input of agreement (512) from the user to the proposed solution, automatically creating (522, 524) a change notice (238) with the suggested text, a business process management ticket (240), and a data entry into a database (216).

2. The method of claim 1, further comprising, responsive to a determination (518) that the feature change is flight critical, automatically creating (520) a flight alert (236).

3. The method of claim 1 or 2, further comprising, responsive to a determination there is no discrepancy between the valid time of the AIXM file and the AIRAC cycle effective dates, automatically creating only the business process management ticket and the data entry into the database.

4. The method of any of claims 1 to 3, further comprising, responsive to input of disagreement (512) from the user to the proposed solution, displaying (514), in the dashboard, input options (226) to manually enter a solution and update the database.

5. The method of any of claims 1 to 4, wherein the features include at least one of runway identity, altitude, Airspace, Elevation, Azimuth, Route, and Glidepath.

6. The method of any of claims 1 to 5,wherein the flight alert criteria (214) is updated regularly based on industry standards.

7. The method of any of claims 1 to 6, wherein the dashboard further displays at least one of:
a timeline of the feature changes (228);
overlap of the valid time with the AIRAC cycle effective dates (230);
a timeframe of flight alert (232); or
a timeframe of change notice (234).

8. A system (200) for decision making support, the system comprising:
a storage device (616) that stores program instructions;
one or more processors (604) operably connected to the storage device and configured to execute the program instructions to cause the system to:
receive (502) input of an Aeronautical Information Exchange Model, AIXM, file (202), wherein the AIXM file includes a valid time (204) for features within the AIXM file;
compare (504) the valid time of the AIXM file with an Aeronautical Information Regulation and Control (AIRAC) cycle (206) effective dates (208);
responsive to a discrepancy (506) between the valid time of the AIXM file and the AIRAC cycle effective dates, determine (508) if a feature change (212) resulting from the discrepancy is flight critical; wherein determining whether a feature change resulting from the discrepancy is flight critical comprises comparing feature changes between the AIXM file and a previously released data file according to specified flight alert criteria (214);
display (510) the feature change and a proposed solution (224) with suggested text to a user in a dashboard (222); wherein a decision-making support system (200) generates the proposed solution (224) by cross-referencing the identified feature change (212) with the database (216); and
responsive to input of agreement (512) from the user to the proposed solution, automatically create (522, 524) a change notice (238) with the suggested text, a business process management ticket (240), and a data entry into a database (216).

9. The system of claim 8, further comprising, responsive to a determination (518) that the feature change is flight critical, automatically creating (520) a flight alert (236).

10. The system of claim 8 or 9, further comprising, responsive to a determination there is no discrepancy between the valid time of the AIXM file and the AIRAC cycle effective dates, automatically creating only the business process management ticket and the data entry into the database.

11. The system of any of claims 8 to 10, further comprising, responsive to input of disagreement (512) from the user to the proposed solution, displaying (514), in the dashboard, input options (226) to manually enter a solution and update the database.

12. The system of any of claims 8 to 11, wherein the AIXM file comprises an Aeronautical Information Exchange Model (AIXM) file.

13. The system of any of claims 8 to 12, wherein determining whether a feature change resulting from the discrepancy is flight critical comprises comparing feature changes between the AIXM file and a previously released data file according to specified flight alert criteria (214).

14. The system of any of claims 8 to 13, wherein the dashboard further displays at least one of:
a timeline of the feature changes (228);
overlap of the valid time with the AIRAC cycle effective dates (230);
a timeframe of flight alert (232); or
a timeframe of change notice (234).

15. A computer program product (622) for decision making support, the computer program product comprising:
a computer-readable storage medium (624) having program instructions which, when executed by a computer, cause the computer to carry out the steps of the method of any one of claims 1 to 7.

## Patentansprüche

1. Ein computerimplementiertes Verfahren (500) zur Entscheidungsfindungsunterstützung, wobei das Verfahren Folgendes umfasst:
verwenden einer Anzahl von Prozessoren (252), um die folgenden Vorgänge auszuführen:
empfangen (502) von Eingaben einer AIXM-Datei (AIXM = englisch: *Aeronautical Information Exchange Model* - Luftfahrtinformationsaustauschmodell), wobei die AIXM-Datei eine gültige Zeit (204) für Merkmale in der aktuellen Datendatei beinhaltet;
vergleichen (504) der gültigen Zeit der AIXM-Datei mit Wirksamkeitsdaten (208) von einem AIRAC-Zyklus (AIRAC *= Aeronautical Information Regulation and Control -* Luftfahrtinformationsregulierung und -kontrolle) (206);
als Reaktion auf eine Diskrepanz (506) zwischen der gültigen Zeit der AIXM-Datei und den Wirksamkeitsdaten vom AIRAC-Zyklus, bestimmen (508), ob eine Merkmalsänderung (212), die sich aus der Diskrepanz ergibt, flugkritisch ist; wobei das Bestimmen, ob eine Merkmalsänderung, die sich aus der Diskrepanz ergibt, flugkritisch ist, das Vergleichen von Merkmalsänderungen zwischen der AIXM-Datei und einer zuvor freigegebenen Datendatei gemäß spezifizierten Flugwarnkriterien (214) umfasst;
anzeigen (510) der Merkmalsänderung und einer vorgeschlagenen Lösung (224) mit vorgeschlagenem Text einem Benutzer in einem Dashboard (222); wobei ein Entscheidungsfindungsunterstützungssystem (200) die vorgeschlagene Lösung (224) durch Querverweisen der identifizierten Merkmalsänderung (212) mit der Datenbank (216) erzeugt; und
als Reaktion auf die Eingabe von Einigkeit (512) vom Benutzer zu der vorgeschlagenen Lösung, automatisches Erstellen (522, 524) von einer Änderungsmitteilung (238) mit dem vorgeschlagenen Text, einem Geschäftsprozessmanagement-Ticket (240) und einer Dateneingabe in eine Datenbank (216).

2. Das Verfahren von Anspruch 1, ferner umfassend als Reaktion auf eine Bestimmung (518), dass die Merkmalsänderung flugkritisch ist, automatisches Erzeugen (520) einer Flugwarnung (236).

3. Das Verfahren von Anspruch 1 oder 2, ferner umfassend als Reaktion auf eine Bestimmung, dass keine Diskrepanz zwischen der gültigen Zeit der AIXM-Datei und den Wirksamkeitsdaten vom AIRAC-Zyklus besteht, automatisches Erstellen nur des Geschäftsprozessmanagement-Tickets und der Dateneingabe in die Datenbank.

4. Das Verfahren von einem der Ansprüche 1 bis 3, ferner umfassend, als Reaktion auf die Eingabe von Uneinigkeit (512) durch dem Benutzer zu der vorgeschlagenen Lösung, Anzeigen (514) von Eingabeoptionen (226) in dem Dashboard, um manuell eine Lösung einzugeben und die Datenbank zu aktualisieren.

5. Das Verfahren von einem der Ansprüche 1 bis 4, wobei die Merkmale mindestens eines von Landbahnidentität, Flughöhe über dem Meeresspiegel, Luftraum, Elevation, Azimut, Strecke und Gleitweg beinhalten.

6. Das Verfahren von einem der Ansprüche 1 bis 5, wobei die Flugwarnkriterien (214) regelmäßig auf Grundlage von Industriestandards aktualisiert werden.

7. Das Verfahren von einem der Ansprüche 1 bis 6, wobei das Dashboard ferner mindestens eines von den Folgenden anzeigt:
eine Zeitlinie der Merkmalsänderungen (228);
Überschneidung der gültigen Zeit mit den Wirksamkeitsdaten (230) vom AIRAC-Zyklus;
einen Zeitrahmen von Flugwarnung (232); oder
einen Zeitrahmen von Änderungsmitteilung (234).

8. Ein System (200) zur Entscheidungsfindungsunterstützung, wobei das System Folgendes umfasst:
eine Speichervorrichtung (616), die Programmanweisungen speichert;
einen oder mehrere Prozessoren (604), die betriebsfähig mit der Speichervorrichtung verbunden und dazu konfiguriert sind, die Programmanweisungen auszuführen, um zu bewirken, dass das System:
Eingaben einer AIXM-Datei (202) empfängt (502), wobei die AIXM-Datei (AIXM *= Aeronautical Information Exchange Model)* eine gültige Zeit (204) für Merkmale in der AIXM-Datei beinhaltet;
die gültige Zeit der AIXM-Datei mit Wirksamkeitsdaten (208) vom AIRAC-Zyklus (AIRAC *= Aeronautical Information Regulation and Control)* vergleicht (504);
als Reaktion auf eine Diskrepanz (506) zwischen der gültigen Zeit der AIXM-Datei und den Wirksamkeitsdaten vom AIRAC-Zyklus, bestimmt (508), ob eine Merkmalsänderung (212), die sich aus der Diskrepanz ergibt, flugkritisch ist; wobei das Bestimmen, ob eine Merkmalsänderung, die sich aus der Diskrepanz ergibt, flugkritisch ist, das Vergleichen von Merkmalsänderungen zwischen der AIXM-Datei und einer zuvor freigegebenen Datendatei gemäß spezifizierten Flugwarnkriterien (214) umfasst;
die Merkmalsänderung und eine vorgeschlagene Lösung (224) mit vorgeschlagenem Text einem Benutzer in einem Dashboard (222) anzeigt (510); wobei ein Entscheidungsfindungsunterstützungssystem (200) die vorgeschlagene Lösung (224) durch Querverweisen der identifizierten Merkmalsänderung (212) mit der Datenbank (216) erzeugt; und
als Reaktion auf Eingaben einer Vereinbarung (512) vom Benutzer zu der vorgeschlagenen Lösung, automatisch eine Änderungsmitteilung (238) mit dem vorgeschlagenen Text, ein Geschäftsprozessmanagement-Ticket (240) und eine Dateneingabe in eine Datenbank (216) erstellt (522, 524).

9. Das System von Anspruch 8, ferner umfassend als Reaktion auf eine Bestimmung (518), dass die Merkmalsänderung flugkritisch ist, automatisches Erzeugen (520) einer Flugwarnung (236).

10. Das System von Anspruch 8 oder 9, ferner umfassend als Reaktion auf eine Bestimmung, dass keine Diskrepanz zwischen der gültigen Zeit der AIXM-Datei und den Wirksamkeitsdaten vom AIRAC-Zyklus besteht, automatisches Erstellen nur des Geschäftsprozessmanagement-Tickets und der Dateneingabe in die Datenbank.

11. Das System von einem der Ansprüche 8 bis 10, ferner umfassend, als Reaktion auf die Eingabe von Uneinigkeit (512) vom Benutzer zu der vorgeschlagenen Lösung, Anzeigen (514) von Eingabeoptionen (226) in dem Dashboard, um eine Lösung manuell einzugeben und die Datenbank zu aktualisieren.

12. Das System von einem der Ansprüche 8 bis 11, wobei die AIXM-Datei eine AIXM-Datei (AIXM *= Aeronautical Information Exchange Model)* umfasst.

13. Das System von einem der Ansprüche 8 bis 12, wobei das Bestimmen, ob eine Merkmalsänderung, die sich aus der Diskrepanz ergibt, flugkritisch ist, das Vergleichen von Merkmalsänderungen zwischen der AIXM-Datei und einer zuvor freigegebenen Datendatei gemäß spezifizierten Flugwarnkriterien (214) umfasst.

14. Das System von einem der Ansprüche 8 bis 13, wobei das Dashboard ferner mindestens eines von Folgendem anzeigt:
eine Zeitlinie der Merkmalsänderungen (228);
Überschneidung der gültigen Zeit mit den Wirksamkeitsdaten (230) vom AIRAC-Zyklus;
einen Zeitrahmen von Flugwarnung (232); oder
einen Zeitrahmen von Änderungsmitteilung (234).

15. Ein Computerprogrammprodukt (622) zur Entscheidungsfindungsunterstützung, wobei das Computerprogrammprodukt Folgendes umfasst:
ein computerlesbares Speichermedium (624) mit Programmanweisungen, welche, wenn sie von einem Computer ausgeführt werden, den Computer veranlassen, die Schritte des Verfahrens von einem der Ansprüche 1 bis 7 auszuführen.

## Revendications

1. Un procédé mis en œuvre par ordinateur (500) d'aide à la prise de décision, le procédé comprenant :
utiliser un certain nombre de processeurs (252) pour effectuer les opérations de :
recevoir (502) des entrées d'un fichier AIXM (AIXM = anglais *: Aeronautical Information Exchange Model* - modèle d'échange d'informations aéronautiques) et dans lequel le fichier AIXM comprend un temps valide (204) pour des caractéristiques dans le fichier de données actuel ;
comparer (504) le temps valide du fichier AIXM avec des dates d'entrée en vigueur (208) d'un cycle AIRAC (AIRAC *= Aeronautical Information Regulation and Control* - réglementation et contrôle d'informations aéronautiques) (206) ;
en réponse à une divergence (506) entre le temps valide du fichier AIXM et les dates d'entrée en vigueur du cycle AIRAC, déterminer (508) si un changement de caractéristique (212) résultant de la divergence est critique pour le vol ; dans lequel déterminer si un changement de caractéristique résultant de la divergence est critique pour le vol comprend comparer des changements de caractéristique entre le fichier AIXM et un fichier de données précédemment publié selon des critères d'alerte de vol spécifiés (214) ;
afficher (510) le changement de caractéristique et une solution proposée (224) avec du texte suggéré à un utilisateur dans un tableau de bord (222) ; dans lequel un système d'aide à la prise de décision (200) génère la solution proposée (224) en croisant le changement de caractéristique identifié (212) avec la base de données (216) ; et
en réponse à l'entrée d'un accord (512) de l'utilisateur à la solution proposée, créer automatiquement (522, 524) un avis de changement (238) avec le texte suggéré, un ticket de gestion des processus métiers (240) et une entrée de données dans une base de données (216).

2. Le procédé de la revendication 1, comprenant en outre, en réponse à une détermination (518) que le changement de caractéristique est critique pour le vol, la création automatique (520) d'une alerte de vol (236).

3. Le procédé de la revendication 1 ou 2, comprenant en outre, en réponse à une détermination d'absence de divergence entre le temps valide du fichier AIXM et les dates d'entrée en vigueur du cycle AIRAC, la création automatique uniquement du ticket de gestion des processus métiers et l'entrée de données dans la base de données.

4. Le procédé de l'une quelconque des revendications 1 à 3, comprenant en outre, en réponse à l'entrée de désaccord (512) de l'utilisateur à la solution proposée, afficher (514), dans le tableau de bord, des options d'entrée (226) pour entrer manuellement une solution et mettre à jour la base de données.

5. Le procédé de l'une quelconque des revendications 1 à 4, dans lequel les caractéristiques comprennent au moins l'un parmi l'identité de piste, l'altitude, l'espace aérien, l'élévation, l'azimut, la route et la trajectoire de descente.

6. Le procédé de l'une quelconque des revendications 1 à 5, dans lequel les critères d'alerte de vol (214) sont mis à jour régulièrement sur la base de normes de l'industrie.

7. Le procédé de l'une quelconque des revendications 1 à 6, dans lequel le tableau de bord affiche en outre au moins l'un parmi :
une chronologie des changements de caractéristique (228) ;
un chevauchement du temps valide avec les dates d'entrée en vigueur du cycle AIRAC (230) ;
un calendrier d'alerte de vol (232) ; ou
un calendrier d'avis de changement (234).

8. Un système (200) d'aide à la prise de décision, le système comprenant :
un dispositif de stockage (616) qui stocke des instructions de programme ;
un ou plusieurs processeurs (604) connectés de manière opérationnelle au dispositif de stockage et configurés pour exécuter les instructions de programme afin d'amener le système à :
recevoir (502) des entrées d'un fichier AIXM (AIXM *= Aeronautical Information Exchange Model)* (202), dans lequel le fichier AIXM comprend un temps valide (204) pour des caractéristiques dans le fichier AIXM ;
comparer (504) le temps valide du fichier AIXM avec des dates d'entrée en vigueur (208) d'un cycle AIRAC (AIRAC *= Aeronautical Information Regulation and Control)* (206) ;
en réponse à une divergence (506) entre le temps valide du fichier AIXM et les dates d'entrée en vigueur du cycle AIRAC, déterminer (508) si un changement de caractéristique (212) résultant de la divergence est critique pour le vol ; dans lequel déterminer si un changement de caractéristique résultant de la divergence est critique pour le vol comprend comparer des changements de caractéristique entre le fichier AIXM et un fichier de données précédemment publié selon des critères d'alerte de vol spécifiés (214) ;
afficher (510) le changement de caractéristique et une solution proposée (224) avec du texte suggéré à un utilisateur dans un tableau de bord (222) ; dans lequel un système d'aide à la prise de décision (200) génère la solution proposée (224) en croisant le changement de caractéristique identifié (212) avec la base de données (216) ; et
en réponse à l'entrée d'un accord (512) de l'utilisateur à la solution proposée, créer automatiquement (522, 524) un avis de changement (238) avec le texte suggéré, un ticket de gestion des processus métiers (240) et une entrée de données dans une base de données (216).

9. Le système de la revendication 8, comprenant en outre, en réponse à une détermination (518) que le changement de caractéristique est critique pour le vol, la création automatique (520) d'une alerte de vol (236).

10. Le système de la revendication 8 ou 9, comprenant en outre, en réponse à une détermination qu'il n'y a pas de divergence entre le temps valide du fichier AIXM et les dates d'entrée en vigueur du cycle AIRAC, créer automatiquement uniquement le ticket de gestion des processus métiers et l'entrée de données dans la base de données.

11. Le système de l'une quelconque des revendications 8 à 10, comprenant en outre, en réponse à l'entrée de désaccord (512) de l'utilisateur à la solution proposée, afficher (514), dans le tableau de bord, des options d'entrée (226) pour entrer manuellement une solution et mettre à jour la base de données.

12. Le système de l'une quelconque des revendications 8 à 11, dans lequel le fichier AIXM comprend un fichier AIXM (AIXM *= Aeronautical Information Exchange Model).*

13. Le système de l'une quelconque des revendications 8 à 12, dans lequel déterminer si un changement de caractéristique résultant de la divergence est critique pour le vol comprend comparer des changements de caractéristique entre le fichier AIXM et un fichier de données précédemment publié selon des critères d'alerte de vol spécifiés (214).

14. Le système de l'une quelconque des revendications 8 à 13, dans lequel le tableau de bord affiche en outre au moins l'un parmi :
une chronologie des changements de caractéristique (228) ;
un chevauchement du temps valide avec les dates d'entrée en vigueur du cycle AIRAC (230) ;
un calendrier d'alerte de vol (232) ; ou
un calendrier d'avis de changement (234).

15. Un produit de programme informatique (622) d'aide à la prise de décision, le produit de programme informatique comprenant :
un support de stockage lisible par ordinateur (624) ayant des instructions de programme qui, lorsqu'elles sont exécutées par un ordinateur, amènent l'ordinateur à exécuter les étapes du procédé de l'une quelconque des revendications 1 à 7.
